(19) **Europäisches Patentamt**
**European Patent Office**
**Office européen des brevets**

(11) **EP 2 028 869 A1**

(12) **EUROPEAN PATENT APPLICATION**
published in accordance with Art. 153(4) EPC

(43) Date of publication:
**25.02.2009 Bulletin 2009/09**

(21) Application number: **07800864.6**

(22) Date of filing: **04.09.2007**

(51) Int Cl.:
*H04Q 7/22* (0000.00)     *H04M 3/42* (2006.01)

(86) International application number:
**PCT/CN2007/002647**

(87) International publication number:
**WO 2008/095364 (14.08.2008 Gazette 2008/33)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **05.02.2007 CN 200710000421**

(71) Applicant: **Huawei Technologies Co., Ltd.**
**Shenzhen, Guangdong Province 518129 (CN)**

(72) Inventors:
• **WANG, Fangshan**
**Guangdong 518129 (CN)**
• **FANG, Qi**
**Guangdong 518129 (CN)**
• **TAN, Yinyan**
**Guangdong 518129 (CN)**
• **ZHONG, Jieping**
**Guangdong 518129 (CN)**

(74) Representative: **Thun, Clemens**
**Mitscherlich & Partner**
**Patent- und Rechtsanwälte**
**Sonnenstrasse 33**
**80331 München (DE)**

(54) **COLORING RING SELECTING METHOD, APPARATUS AND SYSTEM**

(57)     A method, an apparatus and a system for selecting a CRBT include: obtaining at least one CRBT ID available to a call according to user identifier information and obtaining the corresponding CRBT description information according to the at least one CRBT ID; obtaining corresponding user attribute information in the call according to the user identifier information; and matching the CRBT description information with the corresponding user attribute information according to a matching policy and selecting a CRBT according to matching result. Therefore, the method, the apparatus and the system can select a proper CRBT for the calling party according to the conditions of the calling party during the current call.

| |
|---|
| The home MSC/SSP of the calling party triggers an intelligent service terminating process to the SCP serving the CRBT service according to the T_SCI of the called party. — S100 |
| The home MSC/SSP of the calling party routes the call to the home MSC of the called party, and the called party rings. — S200 |
| After receiving the ring tone, the SCP instructs the home MSC/SSP of the calling party to route the call to the CRBT platform; the home MSC/SSP of the calling party sends an IAM to the CRBT platform. — S300 |
| The CRBT platform resolves the user identifier information from the received IAM, obtain at least one CRBT ID available to the call according to user identifier information, obtain the corresponding CRBT description information according to the obtained CRBT ID, obtain the user attribute information associating the call process according to the user identifier information, use a matching policy to match the CRBT description information with the user attribute information, select a target CRBT according to the matching result, and play the proper CRBT to the calling party. — S400 |
| The called party hooks off. The CRBT tone stops, and the calling party converses with the called party. — S500 |

Figure 5

Printed by Jouve, 75001 PARIS (FR)

EP 2 028 869 A1

**Description**

**Field of the Invention**

The present invention relates to the communication field, and in particular, to a method, apparatus and system for selecting a Color Ring Back Tone (CRBT).

**Background of the Invention**

The CRBT service is classified into the called CRBT service and the calling CRBT service. The called CRBT service is a service in which the called party sets the CRBT and plays it to the calling party; the calling CRBT service is a service in which the calling party sets the CRBT and plays it to the calling party himself/herself. If a user customizes a CRBT service, what the calling party hears is no more monotone ring tone, but a specially customized CRBT such as music, a song, a tale and a dialog before the called party hooks off to answer a call.

Currently, there are many solutions to implementation of CRBT services, for example, intelligent network solution, and end office reconstruction and signaling interception solution. The intelligent network solution to implementation of CRBT services is described below as an example.

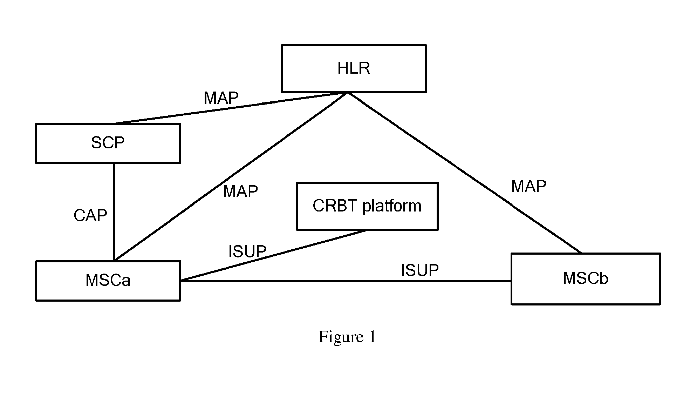

The intelligent network solution to implementation of CRBT services is based on an intelligent network system shown in Figure 1. The intelligent network system includes a transmitter-side Mobile Switching Center (MSC), identified as MSCa, a called party Home Location Register (HLR), a Service Control Point (SCP) of the called party, a CRBT platform, and a receiver-side MSC, identified as MSCb.

The MSCa is adapted to originate a call for the calling party and route the call to the receiver-side MSCb. The HLR is adapted to record the subscription information as regards whether the called party has subscribed to the CRBT service, and support the SCP to query a Mobile Station Roaming Number (MSRN) of the called party. The SCP is adapted to load some service information. The CRBT platform is adapted to preset a CRBT customized by the calling party or called party, manage tone resources, judge whether the CRBT is a calling CRBT or a called CRBT, and provide the customized CRBT.

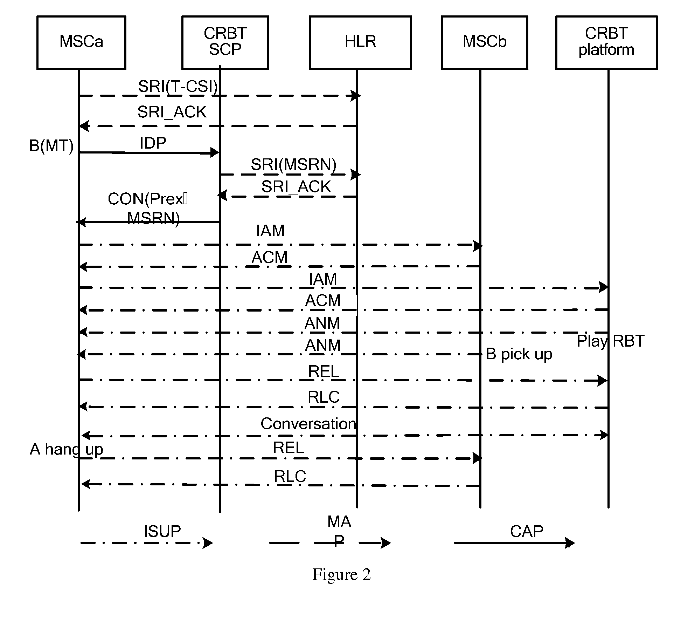

Figure 2 shows a standard mobile intelligent service triggering process based on the foregoing intelligent network system. The principle is: the calling party originates a call to the transmitter-side MSCa; the transmitter-side MSCa obtains the Termination-CAMEL Subscription Information (T-CSI) (namely intelligent subscription information) of the called party from the HLR of the called party; the T-CSI includes the information indicating whether the called party has subscribed to the CRBT service; if the T-CSI includes information indicating that the called party has subscribed to the CRBT service, the MSCa triggers an intelligent service termination process to the SCP serving the CRBT service according to the T-CSI; the MSCa of the calling party end office routes the call to the MSCb of the terminating end office; the SCP that serving the CRBT service instructs the calling party end office to route the call to the CRBT platform; and the CRBT platform plays the subscribed CRBT of the called party to the calling party end office.

In the case that the CRBT service is implemented through the foregoing solution, the CRBT customized by the calling party or the called party can be preset on the CRBT platform in the following ways:

(1) Setting a mapping between a calling number and a CRBT beforehand on the CRBT platform and/or setting a mapping between a called number and a CRBT. In this case, the CRBT platform can select only one CRBT from CRBTs, and is hence unable to provide customized CRBT services for the calling party.

(2) Setting one or more types of combinations, as described in Table 1, beforehand on the CRBT platform:

Table 1

| List of CRBT names | CRBT selection mode | CRBT type | Time setting |
|---|---|---|---|
| List of CRBT numbers | Random, alternating | Default CRBT Personal CRBT Group CRBT | Time segment evey dey Time segment every week Time segment every month Time segment every year Special setting |

The foregoing table reveals that, when a CRBT is set for a specific time segment, it is necessary to preset different CRBTs corresponding to different time segments (a time segment may be a time segment every day, or one or more days every week/month/year) on the CRBT platform. However, the same time segment still corresponds to the same CRBT. When a calling party originates a call to a called party and the call arrives at the CRBT platform, the CRBT platform may play different CRBTs to the calling party in different time segments. If no special setting is made, the same CRBT is played in any time segment by default.

If the set CRBT type is "default CRBT", a default CRBT needs to be preset on the CRBT platform. When a calling party originates a call to a called party and the call arrives at the CRBT platform, the CRBT platform may play the default CRBT to the calling party if no special setting is made for the CRBT service. The user who has customized a CRBT may change the default CRBT.

If the set CRBT type is "personal CRBT", it is necessary to preset a CRBT corresponding to the calling number or called number on the CRBT platform. When a calling party makes a call to the called party and the call arrives at the CRBT platform, the CRBT platform may select a corresponding CRBT according to the calling number or called number, and play the corresponding CRBT to the calling party.

If the set CRBT type is "group CRBT", it is necessary to manage the contact telephone numbers (for example, coworkers and friends) of a similar category in a CRBT group and set a CRBT for each CRBT group. When a calling party originates a call to a called party and the call arrives at the CRBT platform, the CRBT platform finds the group the calling party belongs to among the called party's CRBT groups according to the calling number carried in the call request signaling, and plays the corresponding CRBT of the group to the calling party.

In the foregoing technical solution, only one CRBT corresponds to a calling number or called number in the same time segment. Therefore, when a call arrives at the CRBT platform, the CRBT platform can only select the CRBT according to the calling number or called number; the foregoing technical solution is unable to select a proper CRBT for the calling party according to the conditions of the calling party during the current call, such as preference of the calling party, time of the calling party originating a call, and current state of the calling party.

Moreover, the foregoing technical solution requires the calling party or called party to set a CRBT for each group or for a different time segment manually, or play the default CRBT by setting, which involves complicated operations and huge workload.

Besides, if no CRBT is set for the calling party, the system plays only the default tone to the calling party.

## Summary of the Invention

A method and a system for selecting a CRBT in an embodiment of the present invention are provided to select a proper CRBT for the calling party according to the conditions of the calling party during the current call.

Embodiments of the present invention are realized through the following technical solution:

A method for selecting a CRBT in an embodiment of the present invention includes:

obtaining at least one CRBT ID available to a call according to the user identifier information and obtaining the corresponding CRBT description information according to the obtained CRBT ID;

obtaining the corresponding user attribute information in the call according to the user identifier information; and

using a matching policy to match the CRBT description information with the corresponding user attribute information and selecting a CRBT according to the matching result.

An apparatus for selecting a CRBT provided in an embodiment of the present invention includes:

a data service unit, adapted to obtain at least one CRBT ID available to a call according to the user identifier information, obtain the corresponding CRBT description information according to the obtained CRBT ID, and obtain user attribute information corresponding to the call according to the user identifier information; and

a CRBT selecting unit, adapted to use a matching policy to match the CRBT description information obtained by the data service unit with the user attribute information and select a CRBT according to the matching result.

A system for selecting a CRBT provided in an embodiment of the present invention includes:

a communication network, adapted to establish communication between an calling party end office and a terminating end office and instruct the calling party end office to route a call to a CRBT platform; and

a CRBT platform, adapted to obtain at least one CRBT ID available to the call according to user identifier information in the call, obtain the corresponding to CRBT description information according to the selected CRBT ID(s), obtain the user attribute information corresponding to the call process according to the user identifier information, use a matching policy to match the obtained CRBT description information with the user attribute information, select a CRBT according to the matching result, and play the CRBT.

The foregoing technical solution under the present invention reveals that, before playing a CRBT to the calling party, the CRBT platform obtains at least one CRBT ID available to the call according to user identifier information, obtains the corresponding CRBT description information according to the obtained CRBT ID(s), obtains the user attribute information corresponding to the call process according to the user identifier information, uses a matching policy to match the obtained CRBT description information with the user attribute information, and selects a CRBT according to the matching result. Therefore, the embodiments of the present invention may select a proper CRBT for the calling party according to the conditions of the calling party during the current call.

## Brief Description of the Drawings

Figure 1 shows the framework of an intelligent network system in the conventional art;

Figure 2 shows the standard process of triggering a mobile intelligent service in the conventional art;

Figure 3 is a schematic diagram of the structure in one embodiment of the present invention;

Figure 4 is a schematic diagram of an apparatus for selecting a CRBT in one embodiment of the present invention;

Figure 5 is flow chart of another embodiment of the present invention; and

Figure 6 is an operation flow chart of the CRBT platform in another embodiment of the present invention.

## Detailed Description of the Invention

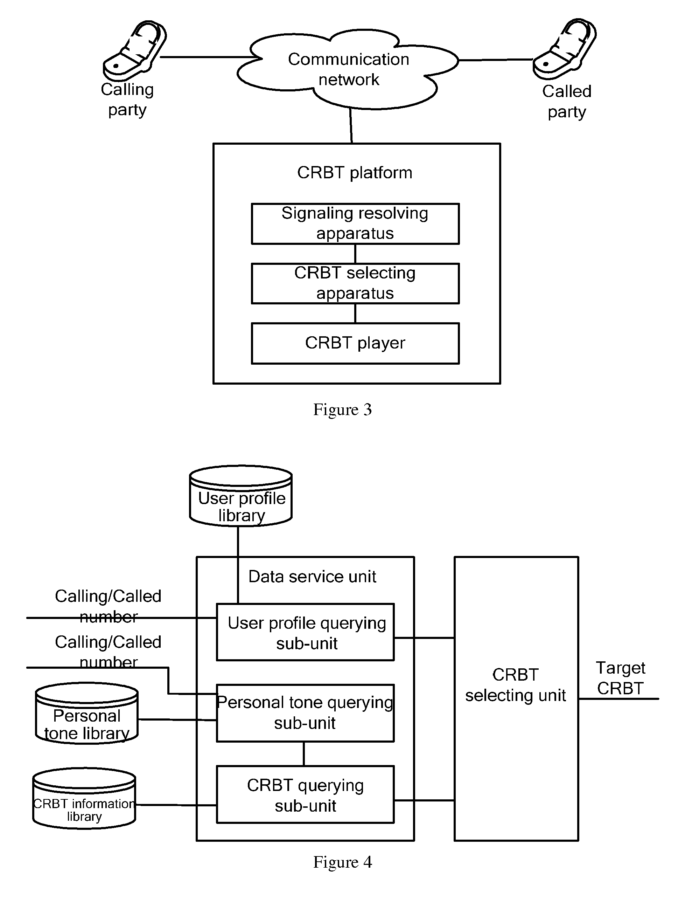

An embodiment of the present invention provides a system for selecting a CRBT. As shown in Figure 3, the system includes a communication network and a CRBT platform. The CRBT platform includes a signaling resolving apparatus, a CRBT selecting apparatus and a CRBT player.

The communication network is adapted to establish communication between an calling party end office and a called party end office and instruct the calling party end office to route a call to the CRBT platform.

More particularly, the calling party end office routes the call to the called party end office through the communication network, and the called party rings, thus establishing communication between the calling party end office and the called party end office; or the calling end office routes the call to the CRBT platform and the CRBT platform routes the call to the called party end office, thus establishing communication between the calling party end office and the called party end office.

During the course of establishing communication or after the establishing communication between the calling party end office and the called party end office through the communication network, the communication network triggers an intelligent service called process to the SCP serving the CRBT service according to the T_CSI of the called party; after receiving the ring tone of the called party, the SCP instructs the calling party end office to route the call to the CRBT platform. After determining that the called party is idle, the calling party end office MSC sends an Initial Address Message (IAM) to the CRBT, wherein the IAM includes a calling number, a called number, and a routing number.

After the call signaling arrives at the CRBT platform, the signaling resolving apparatus in the CRBT platform resolves the user identifier information corresponding to the call according to the call signaling routed to the CRBT platform. The user identifier information includes a calling number and a called number.

The CRBT selecting apparatus obtains at least one CRBT ID available to the call according to user identifier information(such as calling number and called number) resolved by the signaling resolving apparatus, obtains the corresponding to CRBT description information according to the obtained CRBT ID(s), obtains the user attribute information corresponding to the call process according to the user identifier information (for example, calling number and called number) resolved by the signaling resolving apparatus, uses a matching policy to match the obtained CRBT description information with the user attribute information, and selects a CRBT as a target CRBT of the call according to the matching result. For example, a CRBT having the highest matching degree is selected as the target CRBT of the call according to the matching result.

The CRBT player plays the target CRBT selected by the CRBT selecting apparatus.

As shown in Figure 4, a CRBT selecting apparatus includes a data service unit and a CRBT selecting unit. The data service unit includes a personal CRBT querying sub-unit, a CRBT querying sub-unit, and a user profile querying sub-unit. The CRBT selecting apparatus further includes a personal tone library, a CRBT information library, and a user profile library. There is a detailed description as below:

The personal tone library stores a mapping between a user identifier information and one or more CRBT IDs, for example, the mapping between a calling number and one or more CRBT IDs, and/or stores the mapping between each called number and one or more CRBT IDs. For the called CRBT service, the CRBTs corresponding to a CRBT ID include CRBTs customized by the called party and CRBTs presented by the system or other users. For the calling CRBT service, the CRBTs corresponding to a CRBT ID include CRBTs customized by the calling party and CRBTs presented by the system or other users. Table 2 lists the mapping between the calling number or called number and the CRBT IDs available for selection:

Table 2

| User ID (mobile number) | CRBT ID list |
| --- | --- |
| 138*******4 | 000001, 000005, 000008 |
| 138*******1 | 000001, 000002, 000005, 000007 |

The CRBT information library stores the CRBT description information corresponding to all CRBT IDs on the CRBT platform and the CRBT files corresponding to the CRBT IDs.

The CD database (CDDB), which is currently free of charge, includes information about millions of CDs, for example, description information about inherent features of CRBT such as singer, song name and style; and description information about the external features of the CRBT as listed in Table 3:

Table 3

| Serial number of tone | Name of tone | Initial of tone name | Singer | Initial of singer | Type of tone resource | Additional information period | Validity | CRBT price |
|---|---|---|---|---|---|---|---|---|
| 000001 | Later | H | Liu Ruoying | L | Song/pop music | | 1 year | RMB3.00 |

The embodiment uses multiple dimensions to describe a CRBT by the currently existent CRBT description information including at least one of the following information items: name of the CRBT, singer, region of the singer, theme, type, rhythm, mood, era and tone file. Table 4 lists the CRBT description information in the embodiment.

Table 4

| CRBT ID | Name | Singer | Region | Theme | Type | Rhythm | Mood | Era | Tone file |
|---------|------|--------|--------|-------|------|--------|------|-----|-----------|
| 000001 | Later | Liu Ruoying | Taiwan | Love | Popular | Relaxing | Sad | 90s | Later.M |
| 000005 | Super Star | SHE | Taiwan | Love | Popular | Passionate | Joyful | 00s | Super Star.wma |
| 000008 | Two butterflies | Pang long | PRC | Love | Popular | Brisk | Calm | 00s | Two butterflies.Wave |

The user profile library stores the mapping between the user identifier information and the user attribute information, such as the mapping between each calling number and the user attribute information, and/or stores the mapping between each called number and the user attribute information. The user attribute information includes a user ID, user preference information, basic information of the user and/or context information of a user. Table 5 describes the user attribute information:

Table 5

| User ID | Basic information of user | | Context information | | Preference information | | |
|---|---|---|---|---|---|---|---|
| | Age | Gender | Mood | Status | Singer | Region | Rhythm |
| 138*******1 | 23 | M | Calm | Waiting | | | |
| 138*******4 | 22 | M | Anxious | Dining | | | |

In Table 5, the user ID is adapted to identify a user uniquely. It may be a mobile number or fixed number of the calling party, and/or a mobile number or fixed number of the called party.

The basic information of the user may include age and gender of the user. The context information of the user includes mood and status of the user in the current activity. The information may be obtained in three ways:

1. The user provides the information;
2. The information is inferred according to the schedule of the user; or
3. The information is obtained through various biologic sensors. The activity status and place of the user may be inferred from the schedule provided by the user. For example, if the schedule of the user includes a meeting scheduled at 3:00 p,m. - 4:00 p.m. in a day, it is inferred that the activity status of the user at 3:00 p.m. - 4:00 p.m. in the day is "attending a meeting", and the place is "meeting room". For the mood status of the user, sensors may be used to obtain the physiologic features of the user such as heartbeat and blood pressure to infer whether the user is calm or anxious.

The preference information refers to the information about the music preferred by the user, which includes preference attribute and the extent of interest for the preference attribute including songs, singers, regions and rhythm of the songs.

The extent of interest for the preference attribute is expressed by a weight. The value of the weight varies in the range [0,1]. A larger weight means greater extent of interest for the preference attribute. The default value of weight is 0. Table 6 describes the preference information.

Table 6

| Preference information | | | | | |
|---|---|---|---|---|---|
| Singer | | Region | | Rhythm | |
| Name | Weight | Name | Weight | Name | Weight |
| Liu Ruoying | 0.8 | Taiwan | 0.5 | Relaxed | 0.7 |
| SHE | 0.5 | Mainland China | 0.8 | Passionate | 0.2 |
| Pang Long | 0.2 | | | Brisk | 0.6 |

The personal tone library, CRBT information library, and user profile library may be deployed on the CRBT platform, or may be provided by an external component independent of the CRBT platform.

If the operator of the calling party differs from the operator of the called party, the personal tone library may be regarded as two independent physical entities. The operator of the calling party may access data of the personal tone library of the called party and the operator of the called party may access data of the personal tone library of the calling party. If the operator of the calling party differs from the operator of the called party, the personal tone library may also be regarded as a logic entity. Both of the two operators may access the personal tone library. It is the same case with the CRBT information library and the user profile library.

After obtaining the user identifier information (such as the calling number and called number) resolved by the CRBT platform, the data service unit obtains one or more CRBT IDs available to the call according to the calling number or called number. And then the data service unit obtains the corresponding CRBT description information according to the obtained CRBT ID, and obtains the corresponding user attribute information according to the calling number or called number. There is a detailed description as below.

The personal tone querying sub-unit sends a request to the personal tone library according to the calling number and obtains one or more CRBT IDs corresponding to the calling number in the call. If no corresponding CRBT ID is available according to the calling number, the personal tone querying sub-unit obtains from the personal tone library one or more CRBT IDs corresponding to the called number in the call according to the called number. Afterward, the CRBT querying sub-unit sends a request to the CRBT information library according to the CRBT IDs obtained by the personal tone querying sub-unit. The CRBT querying sub-unit obtains the corresponding CRBT description information according to information returned by the CRBT information library, and then saves the CRBT description information to the corresponding CRBT description file.

In the foregoing process, considering that the CRBT is generally played to the calling party, the calling number is input first. According to the calling number, the attribute information such as preference of the calling party is searched out. After the attribute information of the calling party is searched out, the CRBT is selected according to the attribute information of the calling party. If the attribute information of the calling party is unavailable or empty, the CRBT can be selected according to the attribute information of the called party. In this case, what the user profile querying sub-unit queries is the attribute information of the called party. The detailed description is as below.

While searching for the CRBT description information, the user profile querying sub-unit sends a request to the user profile library according to the calling number and obtains the corresponding user attribute information according to the information returned by the user profile library. If the user attribute information corresponding to the call process is unavailable, the corresponding request is sent to the user profile library, and the corresponding user attribute information is obtained according to the information returned by the user profile library. Afterward, the user attribute information is saved into the corresponding user profile file.

The CRBT selecting unit uses a matching policy to match the CRBT description information obtained by the data service unit with the user attribute information and selects a target CRBT according to the matching result. For example, the CRBT selecting unit selects the CRBT having the highest matching degree as the target CRBT of the call according to the matching result.

While recommending, some existing individualized recommendation systems (such as collaborative recommendation system and content-based recommendation system) considers both objects feature and users' feature and calculates matching degree between a user and another user or between a user and a recommended object. The matching degree may be calculated in many ways such as inner product method based on vector space, corner cosine method and Euclidean distance method. Therefore, the method for calculating the matching degree in the conventional art may be drawn upon for calculating the matching degree in the embodiments of the present invention.

The CRBT description information may correspond to the user preference information exactly. For example, the CRBT description information corresponding to a CRBT contains singer information, and the user preference attribute information also corresponds to preference information of the singer. Therefore, it is appropriate to calculate the matching degree between the user and the CRBT through the existing inner product method. In order to make the CRBT selection more flexible, each type of user context information (obtained through the current activity information of the user) may be mapped to a specific type of attribute that describes the user, indicating which CRBT is preferred by the user in a specific status. If the user preference information in the user profile is regarded as a relatively long-term preference, the preference attribute mapped from the user context information is a short-term preference of the user. In the mapping, the user context information may be mapped to the preference information in the user attribute information. if the mapping from the user context information to the vector of the preference information in the user attribute information succeeds, the corresponding vector dimension value (namely, weight) is set. For example, the weight of the user preference information mapped from the context information is set to 1. The mapping rule between the user context information and the user preference attribute information may be preseted and saved in the CRBT selecting unit in advance. For example, if mapping rule preseted in advance is: mood -> rhythm; status -> rhythm. In this way, the calm mood may correspond to a relaxing rhythm, namely, calm -> relaxing; the waiting status may corresponds to a brisk rhythm, namely, waiting -> brisk.

The process of calculating the matching degree between the CRBT and the user is: extracting same vector information which exists in both the CRBT description information and the user preference information, using the information which corresponds to the same vector information in the user preference information as a vector dimension, mapping the various vector information in the user attribute information to the vector dimension and mapping the CRBT description information to the vector dimension, and obtaining the corresponding vector dimension value according to mapping result.

The user context information may be mapped with the preference information in the user attribute information. If the mapping to the vector information (such as rhythm) in the corresponding user preference information succeeds, the corresponding vector dimension value is set, for example, the weight may be set as 1. Afterward, the set vector dimension value may be combined with the vector dimension value corresponding to the user attribute information.

Finally, the matching degree between the CRBT description information and the corresponding user attribute information is calculated according to the obtained vector dimension value.

For example, the common items that exist in the CRBT description information and the preference information of the user attribute information are "singer, region, and rhythm". The information of the common items in the preference information of the user attribute information (for example, "Liu Ruoying, Taiwan, relaxing, brisk") may be used a vector dimension. For the vector dimension, each preference item in the user preference may be used as an item of the user vector, and the weight of the attribute is used as value of this user vector item; each vector item in the CRBT description information may correspond to the user vector. If this user preference attribute item does not exist in the CRBT description information, this item is set to "0"; otherwise, the item is set to "1". The formula for calculating the matching degree is:

$$\text{Matching degree} = \text{user vector} \cdot \text{CRBT vector}$$

For example, description information of the CRBT entitled "Later" may include following information.

Singer: Liu Ruoying;

Region: Taiwan;

Rhythm: relaxing;

The user attributes may include following information.

1. Vector dimension values obtained when the user context information is mapped to the preference attribute information in the user attribute information are as following.

Mood: calm -> rhythm: relaxing; weight: 1;

Status: waiting -> rhythm: brisk; weight: 1;

2. Vector dimension values corresponding to the preference attribute information in the user attribute information are as following.

Singer: Liu Ruoying; weight: 0.8;

Region: Taiwan; weight: 0.5;

Rhythm: relaxing; weight: 0.7;

Rhythm: brisk; weight: 0.6;

It is evident that, for the user whose mobile number is 138*******1, in the rhythm preference information, the weight of "relaxing" is 1.7 (= 1 + 0.7), and the weight of "brisk" is 1.6 (= 1 + 0.6).

Therefore, (Liu Ruoying, Taiwan, relaxing, brisk) in the user preference information is used as a vector dimension. The corresponding vector dimensions may include:

The user vector is: (0.8,0.5,1.7,1.6); the CRBT vector is (1,1,1,0).

Therefore, the matching degree between the user and the CRBT entitled "Later" is: user vector ·CRBT vector = (0.8, 0.5, 1.7, 1.6) · (1, 1, 1, 0) = 3 (matching degree)

The operation process of the CRBT selecting apparatus is described below, taking the called CRBT service as an example.

Suppose there is a call, in which the calling number is 138*******1, and the called party user number is 138*******4. The operation process of the CRBT selecting apparatus is as follows.

First, the personal tone querying sub-unit finds the CRBT IDs corresponding to the called number in the personal tone library. The CRBT IDs include 000001, 000005 and 000008.

Afterward, according to the CRBT IDs, the CRBT querying sub-unit finds the corresponding CRBT description information in the CRBT information library and records the CRBT description information in the description file of the CRBT to be selected. Figure 7 lists the description information of the CRBTs which IDs are 000001, 000005 and 000008 respectively.

Table 7

| CRBT ID | Name | Singer | Region | Theme | Type | Rhythm | Mood | Era | Tone file |
|---------|------|--------|--------|-------|------|--------|------|-----|-----------|
| 000001 | Later | Liu Ruoying | Taiwan | Love | Popular | Relaxing | Sad | 90s | Later.MP3 |
| 000005 | Super Star | SHE | Taiwan | Love | Popular | Passionate | Joyful | 00s | Super Star.wma |

(continued)

| CRBT ID | Name | Singer | Region | Theme | Type | Rhythm | Mood | Era | Tone file |
|---------|------|--------|--------|-------|------|--------|------|-----|-----------|
| 000008 | Two Pang butterflies | Pang Long | PRC | Love | Popular | Brisk | Calm | 00s | Two butterflies. Wave |

Meanwhile, according to the calling number, the user profile querying sub-unit finds the user attribute information in the user profile library and saves the user attribute information into the user profile file. Table 8 lists the attribute information of the user which ID is 138*******1.

Table 8

| Basic information | | | Context information | | Preference information | | |
|---|---|---|---|---|---|---|---|
| User ID | Age | Gender | Mood | Status | Singer | Region | Rhythm |
| 138*******1 | 23 | M | Calm | Waiting | | | |

Table 9 lists the user preference information.

Table 9

| Preference information | | | | | |
|---|---|---|---|---|---|
| Singer | | Region | | Rhythm | |
| Name | Weight | Name | Weight | Name | Weight |
| Liu Ruoying | 0.8 | Taiwan | 0.5 | Relaxing | 0.7 |
| SHE | 0.5 | Mainland China | 0.8 | Passionate | 0.2 |
| Pang Long | 0.2 | | | Brisk | 0.6 |

Afterward, the description file of the CRBT to be selected is matched with the content in the user profile file. Suppose that the following rules are set for the context in the CRBT policy setting:

Mood -> rhythm; status -> rhythm;
Calm -> relaxing; waiting -> brisk;

Therefore, for user 138*******1, the weight of "relaxing" in the rhythm preference information is 1.7 (= 1 + 0.7); the weight of "brisk" is 1.6 (= 1 + 0.6); the same vector information exists in both the CRBT description information and the user attribute information, including singer, region, and rhythm. The information included in the same vector information in the user preference information is used as a vector dimension, namely (Liu Ruoying, SHE, Pang Long, Taiwan, relaxing, passionate, brisk). Therefore, the user attribute information is matched with the vector dimension to obtain the corresponding user vector, and the CRBT description information is matched with the vector dimension to obtain the corresponding CRBT vector, as shown below:

The user vector is: (0.8, 0.5, 0.2, 0.5, 0.8, 0.7, 0.2, 0.6);
The vector of the CRBT 000001 is: (1, 0, 0, 1, 0, 1, 0, 0);
The vector of the CRBT 000005 is: (0, 1, 0, 1, 0, 0, 1, 0);
The vector of the CRBT 000008 is: (0, 0, 1, 0, 1, 0, 0, 1);

For each CRBT, the matching degree is calculated with respect to singer, region and rhythm respectively. The matching degree is:

000001: user vector ·CRBT, 000001 vector = 3 (matching degree)

000005: user vector·CRBT 000005 vector = 1.2 (matching degree)

000008: user vector · CRBT 000008 vector = 2.6 (matching degree)

It is thus evident that the matching degree between the CRBT which ID is 000001 and the calling party attribute information is the highest. Therefore, the CRBT which ID is 000001 may be selected as a target CRBT; or, according to the matching result, the CRBT with the runner-up matching degree may be selected as the target CRBT of a call.

The another embodiment of the present invention is about a CRBT selecting apparatus. The structure and the operation process of the CRBT selecting apparatus are the same as those of the one embodiment, and are not repeated here any further.

The another embodiment of the present invention is about a method for selecting a CRBT. The method includes: before playing a CRBT to the calling party, obtaining at least one CRBT ID available to the call according to the user identifier information such as calling number and called number, obtaining the corresponding CRBT description information according to the obtained CRBT IDs, obtaining the corresponding user attribute information according to the user identifier information such as calling number and called number, using a matching policy to match the CRBT description information with the user attribute information, and selecting a CRBT as the target CRBT according to the matching result, for example, selecting the CRBT of the highest matching degree as the target CRBT of a call according to the matching result.

Before implementation of the one embodiment, the following work needs to be done.

The mapping between user identifier information and at least one CRBT ID is stored. The mapping is between a calling number and at least one CRBT ID, and/or is between each called number and at least one CRBT ID;

The mapping between each CRBT and the CRBT description information, is stored. The CRBT description information includes at least one of name of the CRBT, singer, region of the singer, theme, type, rhythm, mood, era, and tone file.

The mapping between the user identifier information and the user attribute information is stored. The mapping is between each calling number and the user attribute information, and/or between each called number and the user attribute information. The user attribute information includes user preference information and at least one of context information and basic information of the user.

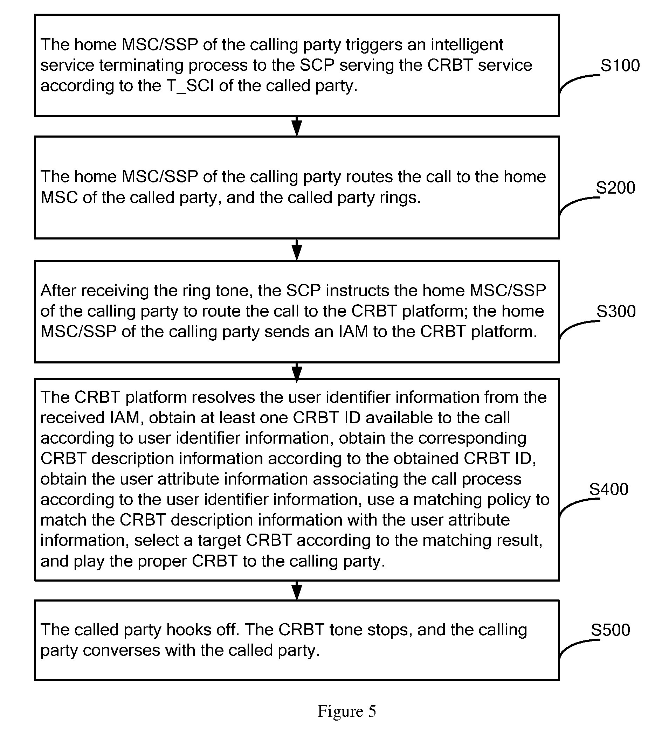

As shown in Figure 5, the implementation process of the one embodiment includes the following steps.

Step S100: The home MSC/SSP of the calling party triggers an intelligent service terminating process to the SCP serving the CRBT service according to the T_SCI of the called party.

Step S200: The home MSC/SSP of the calling party routes the call to the home MSC of the called party, and the called party rings.

Step S300: After receiving the ring tone, the SCP instructs the home MSC/SSP of the calling party to route the call to the CRBT platform. The home MSC/SSP of the calling party sends an IAM to the CRBT platform.

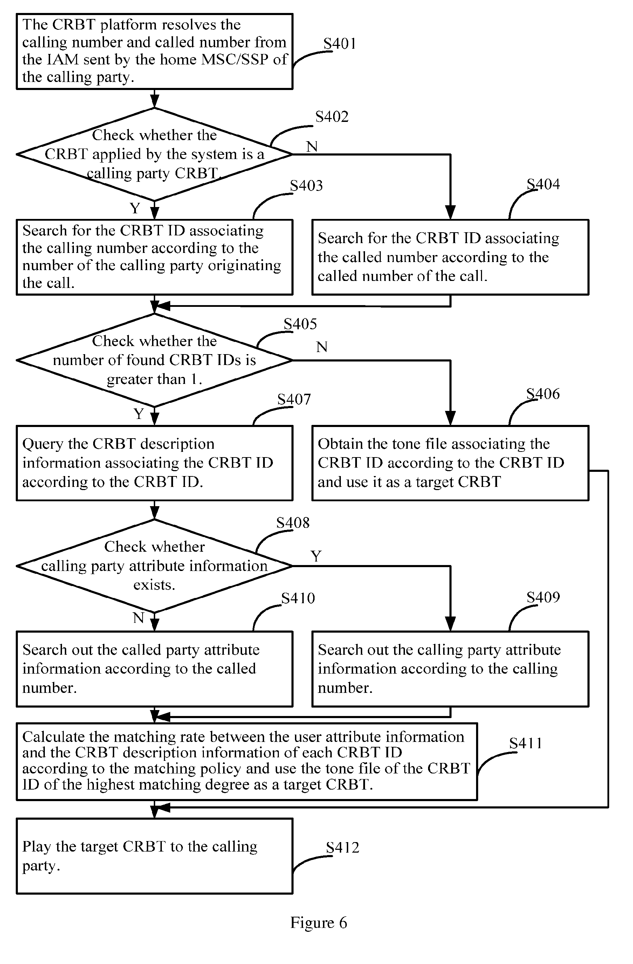

Step S400: The CRBT platform resolves user identifier information such as calling and called number from the received IAM and obtains at least one CRBT ID available to the call according to the calling number or the called number, and obtains the corresponding CRBT description information according to the obtained CRBT ID; obtains the corresponding user attribute information according to the user identifier information such as calling number and called number; uses a matching policy to match the CRBT description information with the user attribute information; selects a CRBT as a target CRBT according to the matching result, for example, selects the CRBT having the highest matching degree as the target CRBT of the call according to the matching result; selects and plays the target CRBT to the calling party. Step S400 is further described below, supposing that the user identifier information is a calling number or called number. As shown in Figure 6, the implementation process includes.

Step S401: The CRBT platform resolves the calling number and called number from the IAM sent by the home MSC/SSP of the calling party.

Step S402: Judging whether the CRBT service applied by the system is the calling CRBT service according to the information customized by the user.

If the system applies the calling CRBT service, the process executes step S403. In S403, the CRBT ID corresponding to the calling number is searched out according to the calling number of the call. Then step S405 is executed.

If the system applies the called CRBT, the process executes step S404. In S404, the CRBT ID corresponding to the called number is searched out according to the called number of the call. Then step S405 is executed. The CRBT IDs corresponding to the called number include IDs corresponding to the subscribed CRBTs of users, or IDs corresponding to the CRBT presented by other users, or IDs corresponding to the free CRBT provided by the system, or IDs corresponding to the CRBTs made by users through Do It Yourself (DIY).

If no corresponding CRBT ID is found through the foregoing steps, the process ends. If the corresponding CRBT ID is found, the process executes the following steps.

Step S405: Judging whether the number of searched CRBT IDs is greater than 1.

If only one CRBT ID is found, the process goes to step S406. In Step S406, the tone file corresponding to the CRBT ID is obtained according to the CRBT ID and is used as a target CRBT, which is followed by step S412.

Step S407: If more than one CRBT ID is found, the CRBT description information corresponding to the CRBT ID is searched out according to the CRBT ID, which is followed by step S408.

Step S408: Checking whether the calling party attribute information corresponding to the call exists.

If the calling party attribute information exists, the process goes to step S409. In S409, the calling party attribute information corresponding to the call is searched out according to the calling number, which is followed by step S411.

If no calling party attribute information exists, the process proceeds to step S410. In S410, the called party attribute information corresponding to the call is searched out according to the called number, which is followed by step S411.

Step S411: The matching degree between the found user attribute information and the found CRBT description information corresponding to each CRBT ID is calculated through a matching degree calculation method according to a matching policy. According to the calculation result, the target CRBT ID is found, for example, the CRBT of the highest matching degree is used as the target CRBT of the call according to the matching result, and the ring tone file of the CRBT ID is used as the target CRBT.

Step S412: Playing the target CRBT to the calling party.

Step S500: The called party hooks off. The CRBT tone stops, and the calling party converses with the called party.

The foregoing technical solution under the present invention reveals that, before playing a CRBT to the calling party, the CRBT platform obtains at least one CRBT ID available to the call according to user identifier information; obtains the corresponding CRBT description information according to the obtained CRBT ID; obtains the user attribute information corresponding to the call process according to the user identifier information; uses a matching policy to match the obtained CRBT description information with the user attribute information; and selects a CRBT according to the matching result. Therefore, embodiments of the present invention enable the calling party to select a proper CRBT according to the conditions of the calling party during the current call.

Moreover, the embodiments of the present invention do not require the calling party or called party to set a CRBT for a group or for different time segments manually, or play the default CRBT tone by setting, thus avoiding complicated operations and reducing the workload.

Furthermore, in an embodiment of the present invention, a proper CRBT may be selected for the calling party among the CRBTs customized by the calling party or called party. Therefore, the foregoing embodiments avoid the trouble of setting an exactly corresponding CRBT for each user, and overcome the defect in the conventional art, namely, the system has to play the default tone to the calling party if no CRBT is set for the calling party in the conventional art.

Embodiments within the scope of the present invention also include computer-readable media for carrying or having computer-executable code, computer-executable instructions, computer-readable instructions, or data structures stored thereon. Such computer-readable media may be any available media, which is accessible by a general-purpose or special-purpose computer system. By way of example, and not limitation, such computer-readable media can comprise physical storage media such as RAM, ROM, or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

Although the invention has been described through some exemplary embodiments, the invention is not limited to such embodiments. It is apparent that those skilled in the art can make various modifications and variations to the present invention without departing from the scope of the present invention. The present invention is intended to cover these modifications and variations provided that they fall in the scope of protection defined by the following claims or their equivalents.

**Claims**

1.  A method for selecting a CRBT, comprising:

    obtaining at least one CRBT ID available to a call according to user identifier information and obtaining the corresponding CRBT description information according to the at least one CRBT ID;
    obtaining corresponding user attribute information in the call according to the user identifier information; and
    matching the CRBT description information with the corresponding user attribute information according to a matching policy and selecting a CRBT according to matching result.

2.  The method of claim 1, wherein before obtaining at least one CRBT ID available to a call according to user identifier information, the method further comprising:

    storing mapping between the user identifier information and the at least one CRBT ID and obtaining the at least one CRBT ID corresponding to the user identifier information according to the mapping between the user identifier information and the at least one CRBT ID.

3. The method of claim 1, wherein before obtaining the corresponding CRBT description information according to the at least one CRBT ID, the method further comprising:

storing mapping between the CRBT ID and the CRBT description information and obtaining the CRBT description information corresponding to the CRBT ID according to the mapping between the CRBT ID and the CRBT description information.

4. The method of claim 1, wherein before obtaining corresponding user attribute information in the call according to the user identifier information, the method further comprising:

storing mapping between the user identifier information and the user attribute information and obtaining the user attribute information corresponding to the user identifier information according to the mapping between the user identifier information and the user attribute information.

5. The method of claim 1, claim 2, claim 3 or claim 4, wherein the user identifier information comprises a calling number or a called number.

6. The method of claim 5, wherein the user attribute information comprises a user ID, user preference information, basic information and/or context information of the user.

7. The method of claim 6, wherein the user preference information comprises at least one of singer, region of the singer and rhythm of a song.

8. The method of claim 7, wherein the process of matching the CRBT description information with the corresponding user attribute information according to a matching policy comprises:

extracting common vector information that exists in both the CRBT description information and the user preference information and using the information in the user preference information corresponding to the common vector information as vector dimensions;
matching the user attribute information to the vector dimensions and mapping the CRBT description information to the vector dimensions respectively and obtaining the corresponding vector dimension values according to the mapping result; and
calculating the matching degree between the CRBT description information and the corresponding user attribute information according to the vector dimension values.

9. The method of claim 8, wherein before calculating the matching degree between the CRBT description information and the corresponding user attribute information according to the vector dimension values, the method further comprising:

mapping the user context information to the preference information in the user attribute information;
setting vector dimension value corresponding to the vector of the preference information if the mapping from the user context information to the vector of the preference information in the user attribute information succeeds,; and
combining the vector dimension value corresponding to the vector of the preference information with the vector dimension value corresponding to the common vector information in the user attribute information and obtaining a combined vector dimension value.

10. The method of claim 8, wherein the CRBT description information comprises at least one of CRBT name, singer, region of the singer, theme, type, rhythm, mood, year, and tone file.

11. An apparatus for selecting a CRBT, comprising:

a data service unit, adapted to obtain at least one CRBT ID available to a call according to user identifier information, obtain corresponding CRBT description information according to the at least one CRBT ID, and obtain user attribute information corresponding to the call according to the user identifier information; and

a CRBT selecting unit, adapted to match the CRBT description information obtained by the data service unit with the user attribute information according to a matching policy, and select a CRBT according to the matching result.

**12.** The apparatus of claim 11, further comprising:

a personal tone library, adapted to store the mapping between the user identifier information and at least one CRBT ID and provide the data service unit with the mapping between the user identifier information and at least one CRBT ID;

a CRBT information library, adapted to store the mapping between the CRBT ID and the CRBT description information and provide the data service unit with the mapping between the CRBT ID and the CRBT description information; and

a user profile library, adapted to store the mapping between the user identifier information and the user attribute information and provide the data service unit with the mapping between the user identifier information and the user attribute information.

**13.** The apparatus of claim 12, wherein the data service unit comprises:

a personal tone querying sub-unit, adapted to obtain at least one CRBT ID available to the call from the personal tone library according to the user identifier information;

a CRBT querying sub-unit, adapted to obtain the corresponding CRBT description information from the CRBT information library according to the CRBT ID obtained by the personal tone querying sub-unit; and

a user profile querying sub-unit, adapted to obtain the user attribute information corresponding to the call from the user profile library according to the user identifier information.

**14.** A system for selecting a CRBT, comprising:

a communication network, adapted to establish communication between a calling party end office and a called party end office and instruct the calling party end office to route a call to a CRBT platform; and

a CRBT platform, adapted to obtain at least one CRBT ID available to the call according to user identifier information in the call, obtain the corresponding CRBT description information according to the at least one CRBT ID, obtain the user attribute information corresponding to the call according to the user identifier information, match the obtained CRBT description information with the user attribute information according to a matching policy, select a CRBT according to the matching result, and play the selected CRBT.

**15.** The system of claim 14, wherein the CRBT platform further comprises:

a signaling resolving apparatus, adapted to resolve the user identifier information corresponding to the call according to the call routed to the CRBT platform;

a CRBT selecting apparatus, adapted to obtain at least one CRBT ID available to the call according to user identifier information resolved by the signaling resolving apparatus, obtain the corresponding CRBT description information according to the selected CRBT ID, obtain the user attribute information corresponding to the call process according to the user identifier information resolved by the signaling resolving apparatus, match the selected CRBT description information with the user attribute information according to a matching policy, and select a CRBT according to the matching result; and

a CRBT player, adapted to play the CRBT selected by the CRBT selecting apparatus.

Figure 1

| MSCa | CRBT SCP | HLR | MSCb | CRBT platform |
|------|----------|-----|------|---------------|

SRI(T-CSI)

SRI_ACK

B(MT)   IDP

SRI(MSRN)

SRI_ACK

CON(Prex MSRN)

IAM

ACM

IAM

ACM

ANM

ANM    B pick up    Play RBT

REL

RLC

Conversation

A hang up   REL

RLC

ISUP     MAP     CAP

Figure 2

Figure 3

Figure 4

The home MSC/SSP of the calling party triggers an intelligent service terminating process to the SCP serving the CRBT service according to the T_SCI of the called party.

S100

The home MSC/SSP of the calling party routes the call to the home MSC of the called party, and the called party rings.

S200

After receiving the ring tone, the SCP instructs the home MSC/SSP of the calling party to route the call to the CRBT platform; the home MSC/SSP of the calling party sends an IAM to the CRBT platform.

S300

The CRBT platform resolves the user identifier information from the received IAM, obtain at least one CRBT ID available to the call according to user identifier information, obtain the corresponding CRBT description information according to the obtained CRBT ID, obtain the user attribute information associating the call process according to the user identifier information, use a matching policy to match the CRBT description information with the user attribute information, select a target CRBT according to the matching result, and play the proper CRBT to the calling party.

S400

The called party hooks off. The CRBT tone stops, and the calling party converses with the called party.

S500

Figure 5

The CRBT platform resolves the calling number and called number from the IAM sent by the home MSC/SSP of the calling party. — S401

Check whether the CRBT applied by the system is a calling party CRBT. — S402

N →

Y ↓

Search for the CRBT ID associating the calling number according to the number of the calling party originating the call. — S403

Search for the CRBT ID associating the called number according to the called number of the call. — S404

Check whether the number of found CRBT IDs is greater than 1. — S405

N →

Y ↓

Query the CRBT description information associating the CRBT ID according to the CRBT ID. — S407

Obtain the tone file associating the CRBT ID according to the CRBT ID and use it as a target CRBT — S406

Check whether calling party attribute information exists. — S408

Y →

N ↓

Search out the called party attribute information according to the called number. — S410

Search out the calling party attribute information according to the calling number. — S409

Calculate the matching rate between the user attribute information and the CRBT description information of each CRBT ID according to the matching policy and use the tone file of the CRBT ID of the highest matching degree as a target CRBT. — S411

Play the target CRBT to the calling party. — S412

Figure 6

## INTERNATIONAL SEARCH REPORT

| | International application No. |
|---|---|
| | PCT/CN2007/002647 |

| A. CLASSIFICATION OF SUBJECT MATTER |
|---|
| See the extra sheet |
| According to International Patent Classification (IPC) or to both national classification and IPC |

| B. FIELDS SEARCHED |
|---|
| Minimum documentation searched (classification system followed by classification symbols) |
| IPC: H04Q7/-; H04M3/- |

| Documentation searched other than minimum documentation to the extent that such documents are included in the fields searched |
|---|
| |

| Electronic data base consulted during the international search (name of data base and, where practicable, search terms used) |
|---|
| CNPAT,CNKI,WPI,EPODOC,PAJ color+, ring, attribute, id, identify, back, tone, match, information |

### C. DOCUMENTS CONSIDERED TO BE RELEVANT

| Category* | Citation of document, with indication, where appropriate, of the relevant passages | Relevant to claim No. |
|---|---|---|
| Y | CN1852367A, (HUAWEI TECHNOLOGIES CO LTD), 25 Oct. 2006(25.10.2006), description page 5 line 9-10, page 6 line 3-22 | 1-15 |
| Y | CN1753436A, (ZHONGXING COMMUNICATION CO LTD), 29 Mar. 2006(29.03.2006), description page 4 line 7-15 | 1-15 |
| PX | CN101014145A, (HUAWEI TECHNOLOGIES CO LTD), 08 Aug. 2007(08.08.2007), the whole document | 1-15 |
| A | KR20040105517A, (SK TELECOM CO LTD), 16 Dec. 2004(16.12.2004), the whole document | 1-15 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 24 Nov. 2007(24.11.2007) | 13.Dec2007(13.12.2007) |

| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer XU,Wei Telephone No. (86-10)62084930 |
|---|---|

Form PCT/ISA/210 (second sheet) (April 2007)

Form PCT/ISA/210 (continuation of second sheet ) (April 2007)

## INTERNATIONAL SEARCH REPORT
. Information on patent family members

International application No.

PCT/CN2007/002647

| Patent Documents referred in the Report | Publication Date | Patent Family | Publication Date |
|---|---|---|---|
| CN1852367A | 25.10.2006 | NONE | |
| CN1753436A | 29.03.2006 | NONE | |
| CN101014145A | 08.08.2007 | NONE | |
| KR20040105517A | 16.12.2004 | NONE | |

Form PCT/ISA/210 (patent family annex) (April 2007)

# INTERNATIONAL SEARCH REPORT

International application No.

PCT/CN2007/002647

A. CLASSIFICATION OF SUBJECT MATTER:

H04Q7/22 (2006.01) i

H04M3/42 (2006.01) i

Form PCT/ISA/210 (extra sheet) (April 2007)

22